(19) Europäisches Patentamt
European Patent Office
Office européen des brevets

(11) Veröffentlichungsnummer: **0 111 138**
**B1**

(12) **EUROPÄISCHE PATENTSCHRIFT**

(45) Veröffentlichungstag der Patentschrift: **24.09.86**

(51) Int. Cl.⁴: **C 08 G 63/46**, C 08 G 63/66, C 08 G 63/20, C 09 D 5/02

(21) Anmeldenummer: **83110781.8**

(22) Anmeldetag: **28.10.83**

# (54) (Meth)Acryloylgruppen enthaltende Polyester, ein Verfahren zu ihrer Herstellung und ihre Verwendung.

(30) Priorität: **09.11.82 DE 3241264**

(43) Veröffentlichungstag der Anmeldung: **20.06.84 Patentblatt 84/25**

(45) Bekanntmachung des Hinweises auf die Patenterteilung: **24.09.86 Patentblatt 86/39**

(84) Benannte Vertragsstaaten: **BE DE FR GB IT NL**

(56) Entgegenhaltungen:
**EP-A-0 054 105**
**DE-A-2 651 507**
**GB-A-2 025 996**
**US-A-4 035 320**
**US-A-4 281 172**

(73) Patentinhaber: **BAYER AG, Konzernverwaltung RP Patentabteilung, D-5090 Leverkusen 1 Bayerwerk (DE)**

(72) Erfinder: **Brinkmeyer, Hermann, Dr., Bodelschwinghstrasse 12, D-4150 Krefeld 1 (DE)**
Erfinder: **Neuhaus, Karl- Friedrich, Dr., Bodelschwinghstrasse 14, D-4150 Krefeld 1 (DE)**
Erfinder: **Perrey, Hermann, Dr., Auf der Rheinaue 8, D-4150 Krefeld 11 (DE)**
Erfinder: **Bendszus, Otto, Dipl.- Ing., Breite Strasse42, D-4150 Krefeld 1 (DE)**

EP 0 111 138 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft neue (Meth) Acryloylgruppen enthaltende, strahlenhärtbare Polyester. Sie besitzen oberflächenaktive Eigenschaften und werden daher mit Vorteil bei der Herstellung wäßriger Dispersionen oder Emulsionen von strahlenhärtbaren (Meth) Acryloylgruppen enthaltenden Präpolymeren eingesetzt.

Dabei kann auf die Mitverwendung üblicher, externer oberflächenaktiver Mittel und reaktiver, strahlenhärtbarer Verdünnungsmittel oder Lösungsmittel verzichtet werden.

Lösungsmittelfreie, strahlungshärtende Bindemittelsysteme gelangen durch ihre Umweltfreundlichkeit zu immer größerer Bedeutung. Die gewünschten Verarbeitungsviskositäten solcher Bindemittelsysteme werden durch Zusatz von copolymerisierbaren Reaktivverdünnern erreicht. Dieses bedeutet aber, daß bei Veränderung der Viskosität durch Zusatz von Reaktivverdünnern sich auch die Eigenschaften der gehärteten Beschichtung ändern. Dieser Nachteil läßt sich durch die Verwendung wäßriger, strahlenhärtbarer Bindemitteldispersionen vermeiden. Ein weiterer Nachteil liegt in der physiologischen Bedenklichkeit vieler, insbesondere niedermolekularer, reaktiver Verdünnungsmittel.

Wäßrige, strahlungehärtende Bindemitteldispersionen sind an sich bekannt. So werden in der DE-OS 2 853 921 (DS-PS 4 287 039) strahlungshärtbare, wäßrige Bindemitteldispersionen beschrieben, die aus Wasser, mindestens einem polymerisierbaren C-C-Doppelbindungen enthaltenden Präpolymeren, einem externen Dispergierhilfsmittel und einem Photoinitiator bestehen. Die Herstellung der Dispersionen erfolgt dadurch, daß das in einen inerten organischen Lösungsmittel gelöste Präpolymere mit Hilfe von Dispergiermitteln wie Polyvinylalkoholen und/oder Vinylpyrrolidon-Vinylester-Copolymeren in Wasser dispergiert wird. Anschließend wird das organische Lösungsmittel durch Destillation entfernt. Da nicht ausgeschlossen werden kann, daß Wasser mit überdestilliert, speziell dige, wenn die Lösungsmittel mit Wasser azeotrope Gemische bilden, können die Lösungsmittel ohne eine aufwendige Aufarbeitung nicht wieder verwendet werden. Ein weiterer wesentlicher Nachteil dieser Dispersionen besteht darin, daß die wasserlöslichen Dispergatoren nicht copolymerisieren und damit den Grad der erreichbaren Wasserfestigkeit der gehärteten Beschichtung im allgemeinen herabsetzen.

Aus der EP-A-0054105 und der GB-A-2025996 sind Herstellung und Verwendung von (Meth)acrylsäure-modifizierten Polyestern als strahlenhärtbare Überzüge bekannt. Jedoch eignen diese sich weniger zur Applikation in Gegenwart wäßriger Medien.

Weiter sind anionisch wäßrige Dispersionen mit selbstemulgierenden Bindemitteln durch die US-PS 4 033 920 bekannt geworden. Die Selbstemulgierbarkeit der Bindemittel wird durch Neutralisation von freien Carboxylgruppen der Bindemittel mit Basen wie Alkalilaugen oder Aminen erreicht. Solche Bindemitteldispersionen weisen jedoch verschiedene Nachteile auf. So können Estergruppen enthaltende Bindemittel durch Verseifung abgebaut werden; Neutralisationsmittel wie Ammoniak und Amine können beim Verdampfen des Wassers mit verflüchtigt werden und führen zu Geruchsbelästigungen; in der Lackschicht verbliebene Alkaliionen können die Wasserfestigkeit der gehärteten Beschichtung herabsetzen; Amine in der Lackschicht können deren Vergilbung fördern. Von Nachteil ist auch die verdickende Wirkung, die solche ionische Gruppen enthaltenden Bindemittel in Wasser verursachen.

Aus der DE-OS 29 23 338 (US-PS 4 303 567) ist es bekannt, α, β-ethylenisch ungesättigte, in Wasser dispergierbare bzw. als Dispergatoren (Emulgatoren) wirkende Polyester dadurch herzustellen, daß man Polyalkylenglykole, insbesondere Polyethylenglykole mit Molekulargewichten von 250 bis 2000 in das Polyestermolekül einkondensiert. Als endständige Gruppen können die dort beschriebenen Emulgatorpolyester β, γ-ethylenisch ungesättigte Alkohole, z.B. Trimethylolpropandiallylether, einkondensiert enthalten. Gemäß DE-OS 2 804 216 (US-PS 4 281 068) werden derartige Emulgatorpolyester zum Dispergieren anderer ungesättigter Polyester eingesetzt und die erhaltenen wäßrigen Dispersionen für dünnschichtige Überzüge von Holz oder holzähnlichen Stoffen verwendet, wobei die Aushärtung der Bindemittel durch UV-Strahlung erfolgt. Ein Nachteil der beschriebenen Emulgatorpolyester liegt darin, daß sie nicht allgemein als Emulgatoren (Dispergatoren) einsetzbar sind. So eignen sie sich beispielsweise nicht zum Emulgieren von (Meth)Acryloylgruppen enthaltenden Polyurethanpräpolymeren, weil schon nach kurzer Zeit Gelierung der Emulsion eintritt (siehe Vergleichsversuch 1 vorliegender Anmeldung). (Meth)Acryloylgruppen enthaltende Polyester können zwar mittels der oben beschriebenen Emulgatorpolyester in Wasser dispergiert werden, jedoch kann nach der Aushärtung mit UV-Strahlung an den Filmen - verglichen mit UV-gehärteten Filmen aus nur (Meth)Acryloylgruppen enthaltenden Polyestern - eine Verschlechterung der Filmhärte festgestellt werden (siehe Vergleichsversuch 2 vorliegender Anmeldung).

Aufgabe der vorliegenden Erfindung war es, strahlungshärtbare Polyester bereitzustellen, die sich zum Dispergieren (Emulgieren) von strählungshärtbaren, vorzugsweise (Meth) Acryloylgruppen enthaltenden Präpolymeren in Wasser eignen. Dabei sollte auf die Mitverwendung üblicher, externer Dispergatoren (Emulgatoren) verzichtet werden können, ebenso

auf die Mitverwendung reaktiver Verdünnungsmittel und/oder üblicher Lösungsmittel, die oft bei der Herstellung von Dispersionen (Emulsionen) als Hilfsmittel eingesetzt werden. Die aus den Dispersionen erhaltenen, strahlengehärteten Filme sollten eine gute Wasserfestigkeit und mindestens die gleichen mechanischen Werte, z. B. Härte, aufweisen wie Filme aus den reinen strahlungsgehärteten Präpolymeren.

Die Aufgabe wurde dadurch gelöst, daß Polyester bereitgestellt wurden, die formal als Kondensationsprodukte von 1 Mol eines Polyethylen- und/oder Polypropylenglykolethers mit Molgewichten $\bar{M}n$ von etwa 370-6000, 2 Mol einer Dicarbonsäure und 2 Mol eines oxalkylierten, teil(meth)acryloylierten drei- bis sechswertigen gesättigten Alkohols aufgefaßt werden können.

Polyester ähnlicher Struktur sind aus der DE-OS 2 251 612, Beispiel 5 (US-PS 4 001 097, Beispiel 5) bekannt, wo beispielsweise zunächst 1 Mol Diethylenglykol und 2 Mol Tetrahydrophthalsäureanhydrid umgesetzt und anschließend mit 2 Mol Trimethylolpropan und 4 Mol Acrylsäure kondensiert werden. Sie werden als solche oder in Abmischung mit anderen Oligo(meth)acrylaten, Polymeren, reaktiven Verdünnern oder Lösungsmitteln als Beschichtungsmaterial, Überzugsmittel oder Formmassen eingesetzt und durch ionisierende Strahlung gehärtet. Als Emulgatorpolyester wie die erfindungsgemäßen Polyester sind sie ungeeignet, wie der Vergleichsversuch 3 in vorliegender Anmeldung zeigt.

Gegenstand der vorliegenden Erfindung sind somit (Meth)Acryloylgruppen enthaltende Polyester der allgemeinen Formel (I)

$(AC)_x$ T-D-P-D-T $(AC)_y$ (I)

worin bedeuten:

Ac einen Acryloyl- oder Methacryloylrest,

x, y gleich oder verschieden, jeweils eine Zahl von 2 bis 5,

T mindestens einen 3- bis 6-wertigen Rest eines oxalkylierten 3- bis 6-wertigen aliphatischen gesättigten Alkohols, wobei pro Hydroxylgruppe des Alkohols durchschnittlich mindestens 1 Mol Ethylenoxid- und/oder Propylenoxideinheiten addiert worden sind, D einen 2-wertigen Rest einer gesättigten oder ungesättigten aliphatischen $C_3$-$C_{10}$-Dicarbonsäure oder einer cycloaliphatischen, araliphatischen oder aromatischen $C_8$-$C_{10}$-Dicarbonsäure, oder deren Mischungen, der Rest ist formal gebildet aus der vorgenamten Dicarbonsäure; vermindert um die HO-Gruppen in den Carboxylgruppen, und

P einen Rest der allgemeinen Formel (II)

$$(O{-}CH_2{-}\overset{R'}{\overset{|}{C}H})_n{-}O{-} \quad (II)$$

mit R' = H oder $CH_3$ oder deren Mischungen und n = eine Zahl von 8 bis 100.

Unter oxalkylierten 3- bis 6-wertigen aliphatischen Alkoholen werden oxethylierte und/oder oxpropylierte 3- bis 6-wertige aliphatische Alkohole verstanden, wobei pro Hydroxylgruppe des Alkohols durchschnittlich mindestens 1 Mol Ethylenoxid- und/oder Propylenoxideinheiten addiert worden sind. Die oxethylierten Produkte sind bevorzugt.

Vorzugsweise bedeuten in Formel (I):

Ac einen Acryloylrest,

x, y gleich oder verschieden, jeweils eine Zahl von 2 bis 3,

T mindestens einen Rest eines 3- oder 4-wertigen oxethylierten aliphatischen gesättigten Alkohols, wobei pro Hydroxylgruppe des Alkohols 1 bis 3 Mol Ethylenoxideinheiten addiert worden sind,

D einen 2-wertigen Rest einer aliphatischen gesättigten oder ungesättigten $C_4$-$C_{10}$-Dicarbonsäure oder deren Mischungen und

P einen Rest der Formel (III)

$(-O-CH_2-CH_2-)_nO-$ (III)

mit n = 8 bis 100.

Insbesondere bedeuten in Formel (I):

Ac einen Acryloylrest

x 2

y 2

T den Rest

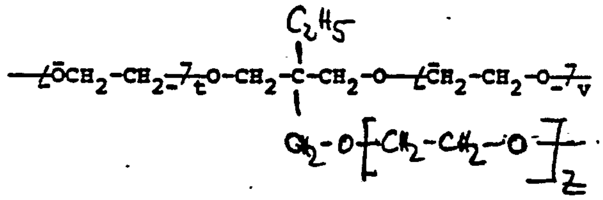

mit t+v+z = eine Zahl von 3 bis 6, insbesondere 3 bis 4,5,

D Maleoyl, Fumaroyl oder deren Mischungen und

P den Rest

$-[O-CH_2-CH_2-]_nO-$

mit n = eine Zahl von 8 bis 40.

Namentlich seien folgende 3- bis 6-wertige aliphatischegesättigte Alkohole beispielsweise genannt:

Glycerin, Trimethylolpropan, Trimethylolethan, Pentaerythrit, Dipentaerythrit, Erythrit, Sorbit, vor zugsweise Trimethylolpropan und Pentaerythrit, insbesondere Trimethylolpropan.

Als Dicarbonsäuren, die für die Herstellung der erfindungsgemäßen Polyester in Frage kommen, seien beispielsweise genannt: Malonsäure, Bernsteinsäure, Glutarsäure, Adipinsäure, Pimelinsäure, Korksäure, Azelainsäure, Sebacinsaure, Maleinsäure, Chlormaleinsäure, Fumarsäure, Citraconsäure, Itaconsäure, Hexahydrophthalsäure, Methylhexahydrophthalsäuren, Tetrahydrophthalsäure, Endomethylentetrahydrophthalsäure, Phthalsäure

oder die Anhydride vorgenannter Dicarbonsäuren, Isophthalsäure, Terephthalsäure, vorzugsweise Maleinsäure, Fumarsäure.

Die dem Rest P der Formel I entsprechenden Alkohole sind bekannte Ethylenglykole und/oder Propylenglykole mit einem Oxethylierungs- bzw. Oxpropylierungsgrad von durchschnittlich 7 bis 99. Unter Oxethylierungs- bzw. Oxpropylierungsgrad ist die durchschnittliche Zahl der Mole Ethylenoxid bzw. Propylenoxid zu verstehen, die an ein Mol Ethylenglykol bzw. 1, 2-Propylenglykol angelagert worden sind. Bevorzugt sind die oxethylierten Ethylenglykole mit einem Oxethylierungsgrad von 7 bis 39.

Die dem Rest $(Ac)_{x(y)}$ T entsprechenden teil (meth)acryloylierten, oxalkylierten 3- bis 6-wertigen Alkohole (Polyole) werden nach bekannten Verfahren hergestellt, z.B. durch Veresterung des oxalkylierten Polyols mit Acrylsäure oder Methacrylsäure oder deren Mischungen, durch Umesterung geeigneter Acrylsäureester oder Methacrylsäureester oder deren Mischungen mit oxalkyliertem Polyol oder durch Umsetzung eines Acrylsäurehalogenids oder Methacrylsäurehalogenids oder deren Mischungen mit oxalkyliertem Polyol, vorzugsweise in Gegenwart eines basischen Hilfsmittels wie z.B. tert. Amine.

Die Umsetzung des oxalkylierten Polyols mit Acrylsäure oder Methacrylsäure oder deren Mischungen zum ethylenischungesättigten OHgruppenhaltigen Partialester erfolgt vorzugsweise durch säurekatalysierte Veresterung in Gegenwart eines Schleppmittels und eines üblichen Polymerisationsinhibitors (vgl. DE-OS 3 045 788, DE-AS 2 1 1 5 373).

Die Herstellung der erfindungsgemäßen Polyesters der Formel (I) erfolgt nach bekannten Methoden der Polyesterherstellung durch Schmelzkondensation, durch azeotrope Veresterung, durch Umesterung oder Alkoholyse von Carbonsäurehalogeniden bzw. Carbonsäureanhydriden. Zur Erzielung ausreichender Reaktionsgeschwindigkeiten können bei der Herstellung die üblichen Veresterungskatalysatoren mitverwendet werden, ferner übliche Polymerisationsinhibitoren und Antioxidantien, stets in üblichen Mengen.

Zur Herstellung der Polyester der Formel (I) werden

a.) 1 HO-Äquivalent dem Rest P entsprechender Polyalkylenglykole,

b.) 2 COOH-Äquivalente dem Rest D entsprechender Dicarbonsäuren,

c.) 3 bis 6 HO-Äquivalente dem Rest T entsprechender

3- bis 6-wertigen aliphatischer, oxalkylierter Alkohole und

d.) 2- bis 5 COOH-Äquivalente (Meth) -Acrylsäure

umgesetzt.

Zur Erzielung der gemäß Formel I angegebenen Struktur der Polyester ist es zweckmäßig, die Umsetzung in mehreren Stufen durchzuführen. So kann eine Vorkondensation des Polyalkylenglykols mit einer Dicarbonsäure (D-P-D) erfolgen, der sich eine azeotrope Veresterung mit einem oxalkylierten Polyol (T) und anschließend (Meth)Acrylsäure (Ac) bzw. mit einem oxalkylierten Polyol (T) und (Meth)Acrylsäure (Ac) in einem Schritt anschließt. Ebenso ist es möglich, erst das oxalkylierte Polyol (T) mit (Meth)Acrylsäure (Ac) bzw. (Meth)Acrylsäureestern umzusetzen und anschließend die Reaktion mit einer Dicarbonsäure (D) und nachfolgend oder gemeinsam mit einem Polyalkylenglykol (P) weiterzuführen.

Vorzugsweise wird das Vorkondensat (D-P-D) aus Polyalkylenglykol und Dicarbonsäure mit endständigen Carboxylgruppen und das Vorkondensat $[(Ac)_{x \text{ oder } y}T]$ mit einer freien HO-Gruppe im Molverhältnis 1:2 verestert.

Bei der Umsetzung des Vorkondensats (DPD) mit einer Mischung aus oxalkyliertem Polyol (T) und (Meth)Acrylsäure (Ac) sowie bei der Umsetzung des Vorkondensats $[(Ac)_{x \text{ oder } y}T]$ mit einer Mischung aus Dicarbonsäure (D) und Polyalkylenglykol (P) ist neben der Bildung der Polyester der Formel (I) mit einem höheren Anteil an Nebenprodukten zu rechnen als nach den anderen angegebenen Verfahren.

Die Säurezahlen der nach den oben geschilderten Verfahren hergestellten Polyester der Formel (I) sollten unter 50 liegen (mg KOH pro g Substanz), vorzugsweise unter 10.

Gegenstand der vorliegenden Erfindung ist auch die Verwendung der Polyester der Formel (I) als strahlenhärtbares, oberflächenaktives Mittel in wäßrigen Dispersionen oder Emulsionen strahlenhärtbarer Zusammensetzungen.

Derartige Dispersionen bzw. Emulsionen enthalten Gemische aus

I. 3-50 Gew.-% Polyester der Formel (I),

II. 97-50 Gew.-% mindestens eines strahlenhärtbaren olefinisch ungesättigten, vorzugsweise (Meth)Acryloylgruppen enthaltenden Präpolymeren,

III. 0-10 Gew.-% eines Photoinitiators und

IV. 25-800 Gew.-% Wasser

wobei sich die Prozentgehalte von III. bzw. IV. auf die Summe der Prozentgehalte aus I. und II., die stets 100 beträgt, beziehen.

Die Dispersionen (Emulsionen) vorliegender Anmeldung sind lösungsmittel- und monomerenfrei. Monomerenfrei bedeutet frei von Monomeren, die mit den Komponenten I und/ oder II copolymerisierbar sind.

Die Dispersionen (Emulsionen) können ferner Inhibitoren und Antioxidantien sowie den speziellen Anwendungen entsprechend übliche UV-Absorber, Zuschlagstoffe, Farbstoffe, Entschäumer, Netzmittel, Konservierungs-, Mattierungsund Verlaufmittel sowie Pigmente enthalten, soweit die Stabilität der Dispersion (Emulsion) und die Polymerisationsgeschwindigkeit nicht beeinträchtigt werden.

Unter strahlenhärtbaren Präpolymeren werden olefinisch ungesättigte Polyester - frei von (Meth)Acryloylgruppenverstanden, wie sie beispielsweise in DE-PS 1 694 149, DE-AS 2 1 13 998, DE-OS 2 804 216 und von J. Bjorksten et al in Polyesters and their Application, Reinhold Publishing Corp., New York 1956, beschrieben sind.

(Meth)Acrylatpräpolymere im Sinne vorliegender Erfindung sind mindestens zwei (Meth) Acryloyioxygruppen, vorzugsweise mindestens zwei Acryloylgruppen enthaltende Präpolymere, die sich von Polyestern, Polyethern, Polyepoxidverbindungen, aliphatischen Polyolen, Polyurethanen und Vinylpolymerisaten ableiten. Derartige (Meth) Acrylatpräpolymere sind bekannt und beispielsweise beschrieben in US-PS 2 101 107, 2 913 973, 2 951 758, 3 066 112, 3 301 743, 3 368 900, 3 380 831, 3 455 801, 3 469 982, 3 485 732, 3 530 100, 3 551 246, 3 552 986, 3 628 963, 3 660 145, 3 664 861, 3 689 310, 3 719 521, 3 732 107, 3 782 961, 3 840 369, 3 888 830, 4 033 920, 4 206 025; GB-PS 1 006 587, 1 241 823, 1 241 824, 1 321 372, Deutsche Offenlegungsschriften 1 916 499 und 2 853 921.

Bevorzugte (Meth)Acrylatpräpolymere sind Polyester (meth)acrylate und Polyurethan (meth) acrylate. Selbstverständlich sind die Polyester (meth) acrylate II verschieden von den Polyestern der Formel (I).

Als Photoinitiatoren sind die für die Strahlungshärtung hinlänglich bekannten Verbindungen geeignet, wie beispielsweise Benzophenon sowie ganz allgemein aromatische Ketonverbindungen, Alkylbenzophenone, halogenmethylierte Benzophenone gemäß der DE-OS 1 949 01 0, Michlers Keton, Anthron, halogenierte Benzophenone. Ebenfalls wirksame Photoinitiatoren stellen Anthrachinon und zahlreiche seiner Derivate dar, beispielsweise β-Methylanthrachinon, tert. -Butylanthrachinon und Anthrachinoncarbonsäureester, ebenso Oximester gemäß DE-OS 1 795 089. Weiter geeignet sind Phenylglyoxylsäureester gemäß DE-OS 2 825 955.

Bevorzugte Photoinitiatoren sind Benzoin und seine Derivate, wie beispielsweise in den DE-OS 1 769 168, 1 769 853, 1 769 854, 1 807 297, 1 807 301, 1 919 678 und der DE-AS 1 694 143 beschrieben, ferner Benzilketale wie z.B. Benzildimethylketale und Hydroxyalkylphenone wie z.B. 2-Hydroxy-2-methyl-1-phenyl-propan-1-on.

Zur Herstellung einer Dispersion (Emulsion) kann das Gemisch aus den Komponenten I, II und gegebenenfalls III in die vorgelegte Wassermenge IV durch einfaches Rühren oder mittels eines Dissolvers eingebracht werden. In vielen Fällen kann es jedoch von Vorteil sein, in das Gemisch aus den Komponenten I, II und gegebenenfalls III die Wassermenge portionsweise unter Rühren einzutragen, da so eine feinteiligere Dispersion (Emulsion) erhalten wird.

Gegebenenfalls kann der Photoinitiator auch nachträglich der Dispersion (Emulsion) zugesetzt werden.

Die Dispersionen (Emulsionen) können nach den herkömmlichen Verfahren durch Gießen, Walzen, Rakeln, Streichen, Tauchen, Drucken, Imprägnieren und Spritzen auf ein geeignetes Substrat zur Herstellung von Überzügen, Beschichtungen und Imprägnierungen aufgebracht werden.

Derartige Substrate sind z. B. Holz und holzähnliche Stoffe wie Furniere, imitierende Polien, Kunststoffe, Metalle, Glas, Keramik, mineralische Materialien, Papier, Kartonagen, Filze, gewebte und nichtgewebte Fasern (Vliese), Kautschukformteile und fotografische Materalien wie z.B. mit fotografischer Schicht versehenes Papier und Umkehrfilme.

Die Dispersionen sind auch als Bindemittel für Druckfarben, Magnetbänder und zur Herstellung von Photoreliefdruckplatten bzw. Photoresistmateralien geeignet.

Nach Auftragen der Dispersion (Emulsion) auf das Substrat, Verdampfung des Wassers und Verfilmung der Lackschicht kann die Härtung mittels energiereicher Strahlen wie Elektronenstrahlen oder in Gegenwart von Photoinitiatoren mit UV-Licht erfolgen. Hierzu werden die üblicherweise für die Härtung strahlenhärtbarer Zusammensetzungen eingesetzten UV- bzw. Elektronenstrahlung erzeugenden Vorrichtungen eingesetzt.

Prinzipiell ist es auch möglich, die Härtung in Gegenwart von Radikale liefernden Substanzen, wie thermischen Polymerisationsinitiatoren durchzuführen.

Die in den nachfolgenden Beispielen angegebenen Viskositäten erfolgten mit einem Rotationsviskosimeter der Firma Haake, Karlsruhe, Typ Viscotester VT 02.

**I. Partiell acryloyliertes oxethyliertes Trimethylolpropan**

A. Es wird ein OH- gruppenhaltiger, Acryloylgruppen enthaltender Partialester hergestellt, indem ein oxethyliertes Trimethylolpropan [OH-Zahl 550 (mg KOH/g Substanz), Oxethylierungsgrad ca. 4] mit Acrylsäure azeotrop verestert wird.

925 g oxethyliertes Trimethylolpropan werden mit 430 g Acrylsäure, 12 g p-Toluolsulfonsäure, 1 g p-Methoxyphenol, 1,2 g Di-tert.-butylhydrochinon und 280 g Toluol und Durchleiten von Luft zum Rückfluß erhitzt und das entstehende Reaktionswasser azeotrop entfernt. Nacn Erreichen einer Säurezahl kleiner 3 (mg KOH/g Substanz) wird das Lösungsmittel im Vakuum entfernt und das Produkt einer Klärfiltration unterworfen. Es wird ein OH-gruppenhaltiger, Acryloylgruppen enthaltender Partialester des oxethylierten Trimethylolpropans erhalten, der durchschnittlich eine OH-Zahl (mg KOH/g Substanz) von 1 05 und eine Säurezahl (mg KOH/g Substranz) von 2 besitzt und

durchschnittlich pro Mol eine Hydroxyl- und zwei Acryloylgruppen enthält.

**II. Polyurethanacrylat (Harz A)**

In einer Rührapparatur werden unter Überleiten von trockener Luft 222 g Isophorondiisocyanat und 0,7 g p-Methoxyphenol vorgelegt und auf 40-65°C erwärmt. Innerhalb von ca. 2 Std. werden 1060 g des partiell acryloylierten oxethylierten Trimethylolpropans nach I. A. zugegeben und bei der angegebenen Temperatur so lange gerührt, bis der NCO-Wert kleiner 0, 1 Gew.-% ist. Man erhält ein Polyurethanacrylat (Harz A) mit einer Viskosität von 62 Pas (22°C), das durch erfindungsgemäße Polyester der Formel (I) emulgiert werden kann.

**III. Polyesteracrylate (Harze B, C und D) für die Emulgierung mit erfindungsgemäßen Polyestern der Formel (I)**

1. 644 g eines Schmelzkondensats, erhalten durch Umsetzung von Maleinsäureanhydrid und Propylenglykol-1, 2 im Molverhältnis 2:1, mit einer Säurezahl (mg KOH/g Substanz) von 475 werden unter azeotropen Bedingungen mit 1374 g eines tetraoxethylierten Trimethylolpropans (OH-Zahl von 550) und 648 g Acrylsäure in Gegenwart von 1 4, 4 g p-Toluolsulfonsäure und jeweils 2,69 g p-Methoxyphenol und Di-tert.-butylhydrochinon mit 1142 g Toluol als Schleppmittel verestert, bis sich kein Wasser mehr abscheidet. Das Schleppmittel wird im Vakuum abdestilliert und nicht umgesetzte Reste von Acrylsäure werden mit Luft desorbiert. Das erhaltene Harz B weist eine Säurezahl von 5,2 und eine Viskosität von 8,5 Pas (20°C) auf.

2. In einem Reaktionsgefäß, versehen mit Rührer, Gaseinleitrohr und Wasserabscheider, werden 458 g eines tetraoxethylierten Trimethylolpropans mit einer OH-Zahl (mg KOH/g Substanz) von 550 mit 216 g Acrylsäure und 174 g Fumarsäure in Gegenwart von 4,3 g p-Toluolsulfonsäure und jeweils 6, 86 g p-Methoxyphenol und Di-tert.-butylhydrochinon in 572 g Toluol als Schleppmittel unter Luftdurchleiten azeotrop verestert. Nachdem sich kein Wasser mehr abscheidet, werden 67,5 g Butandiol-1,4, 0,39 g p-Toluolsulfonsäure und jeweils 0, 07 g p-Methoxyphenol und Di-tert.-butylhydrochmon und 45 g Toluol der Reaktionsmischung zugesetzt.

Es wird weiter azeotrop verestert, bis sich kein Wasser mehr abscheidet. Anschließend wird das Schleppmittel im Vakuum abdestilliert und der Rest an nicht umgesetzter Acrylsäure mit Luft desorbiert. Es wird ein Harz C mit einer Säurezahl von 8 und einer Viskosität von 6,5 Pas (20°C) erhalten.

3. In einer Rührapparatur, versehen mit Rührer, Gaseinleitrohr und Wasserabscheider, werden 348 g Fumarsaure und 114 g Propylenglykol-1,2 in Gegenwart von 2, 3 g p-Toluolsulfonsäure in 116 g Toluol als Schleppmittel unter Durchleiten von Luft azeotrop verestert. Nachdem sich kein Wasser mehr abscheidet, wird mit 1602 g des partiell acryloylierten oxethylierten Trimethylolpropans nach I. A sowie nach Zusatz von 8, 1 g p-Toluolsulfonsäure und jeweils 2,06 g p-Methoxyphenol und Di-tert.-butylhydrochinon und 1260 g Toluol die azeotrope Veresterung weitergeführt.

Wenn sich kein Wasser mehr abscheidet, wird das Schleppmittel im Vakuum abdestilliert, und Reste nicht umgesetzter Acrylsäure werden mit Luft desorbiert. Es wird ein Harz D mit einer Säurezahl von 9,8 und einer Viskosität von 8,5 Pas erhalten.

**Beispiel 1**

(erfindungsgemäßer Polyester = Emulgatorharz I)

In einer Rührapparatur, versehen mit Rührer, Gaseinleitrohr und Wasserabscheider, werden 348 g Fumarsäure mit 555 g Octaglykol (Molverhältnis 2:1) in Gegenwart von 4,5 g p-Toluolsulfonsäure in 100 g Toluol als Schleppmittel unter Durchleiten von Stickstoff azeotrop verestert.

Nachdem sich kein Reaktionswasser mehr abscheidet, wird die azeotrope Veresterung mit 1602 g des partiell acryloylierten oxethylierten Trimethylolpropans nach I.A sowie nach Zusatz von 12,5 g p-Toluolsulfonsäure und jeweils 2,5 g p-Methoxyphenol und Di-tert.-butylhydrochinon und 1026 g Toluol weitergeführt. Wenn sich kein Wasser mehr abscheidet, wird das Schleppmittel im Vakuum abdestilliert. Es wird ein Emulgatorharz I mit einer Säurezahl von 9,5 und einer Viskosität von 38 Pas (20°C) erhalten.

**Beispiel 2**

(erfindungsgemäßer Polyester = Emulgatorharz II)

449 g eines Schmelzkondensats aus Polyethylenglykol mit einem mittleren Molgewicht von 1500 und einer OH-Zahl von 75 und Maleinsäureanhydrid im Äqivalenzverhältnis 1:2 (bezogen auf Hydroxyl- bzw. Carboxylgruppen) werden mit 293 g eines tetraoxethylierten Trimethylolpropans (OH-Zahl 550) und 138 g Acrylsäure in Gegenwart von 4,9 g Toluolsulfonsäure und jeweils 0,98 g p-Methoxyphenol und Di-tert.-butylhydrochinon in 651 g Toluol unter Durchleiten von Luft azeotrop verestert. Nachdem sich kein Wasser mehr abscheidet, wird das Schleppmittel im Vakuum abdestilliert, und Reste nicht umgesetzter Acrylsäure werden mit Luft desorbiert. Das bei Raumtemperatur kristalline Emulgatorharz II

weist eine Säurezahl (mg KOH/g Substanz) von 9,5 auf.

**Beispiel 3**

(erfindungsgemäßer Polyester = Emulgatorharz III)
In einer Rührapparatur wie in Beispiel 1 beschrieben werden 116,8 g Adipinsäure mit 371,2 g eines Polyethylenglykols mit einem mittleren Molgewicht von 1500 und einer OH-Zahl von 75 (Molverhältnis 2:1) in Gegenwart von 2,4 g p-Toluolsulfonsäure in 325,0 g Toluol als Schleppmittel unter Durchleiten von Stickstoff azeotrop verestert. Nach Beendigung der Wasserabscheidung werden 429,0 g des partiell acryloylierten oxethylierten Trimethylolpropans nach I.A, 0,08 g p-Toluolsulfonsäure, jeweils 0,93 g p-Methoxyphenol und Di-tert.-butylhydrochinon und 285 g Toluol in die Apparatur eingebracht und die azeotrope Veresterung wird unter Durchleiten von Luft weitergeführt, bis sich kein Wasser mehr abscheidet. Die Aufarbeitung erfolgt durch Abdestillation des Schleppmittels im Vakuum. Es wird ein bei Raumtemperatur kristallines Emulgatorharz III erhalten, das eine Säurezahl von 8 aufweist.

**Vergleichsbeispiel 1**

Gemäß DE-OS 2 923 338, Beispiel $b_1$, wurde ein Emulgatorpolyester hergestellt, der mit dem Polyurethanacrylat (Harz A) im Verhältnis 8:2 abgemischt wurde. Die emulgierfähige Mischung ohne Photoinitiator war bei einer Lagertemperatur von 60 °C in weniger als 3 Tagen geliert.

**Vergleichsbeispiel 2**

Ein Emulgatorpolyester gemäß DE-OS 2 923 338, Beispiel $b_1$, wurde, wie in dem Anwendungsbeispiel angegeben, mit dem Polyurethanacrylat (Harz A) bzw. mit einem Polyesteracrylat (Harz C) im Verhältnis 8:2 und 2,5 Gew.-% 1-(4-Isopropyl-phenyl) -2-hydroxy-2-methyl-propan- 1 -on emulgiert'aufgezogen, getrocknet und gehärtet. Die Beschichtungen wiesen Pendelhärten von 37" bzw. 70" auf und liegen deutlich unter den Werten der reinen Harze (vgl. Tabelle I).

**Vergleichsbeispiel 3**

Es wurde ein Polyesteracrylat gemäß DE-OS 2 251 612, Beispiel 5, durch Umsetzung von 1 Mol Diethylenglykol mit 2 Mol Tetrahydrophthalsäureanhydrid und anschließend mit 2 Mol Trimethylolpropan und 4 Mol Acrylsäure hergestellt. Das Polyesteracrylat zeigte keine emulgierenden Eigenschaften.

**Vergleichsbeispiel 4**

Es wurden 148 g Phthalsäureanhydrid mit 372 g eines Polyethylenglykols des mittleren Molekulargewichts von 800 und einer OH-Zahl von 150 in 347 g Toluol umgesetzt. Anschließend wurde eine azeotrope Veresterung mit 67 g Trimethylolpropan und 70 g Acrylsäure in Gegenwart von 3,3 g p-Toluolsulfonsäure, jeweils 0,64 g p-Methoxyphenol und Di-tert.-butylhydrochinon und 93 g Toluol unter Durchleiten von Luft durchgeführt. Nachdem sich kein Wasser mehr abschied, wurde das Schleppmittel im Vakuum abdestilliert, und Reste nicht umgesetzter Acrylsäure wurden mit Luft desorbiert.
Es wurde ein Polyesteracrylat mit einer Viskosität von 23 Pas und einer Säurezahl von 34 erhalten.
Das Polyesteracrylat weist keine emulgierenden Eigenschaften auf.

**Vergleichsbeispiel 5**

Es wurden 394 g Octaethylenglykol mit 232 g Fumarsäure in Gegenwart von 3,15 g p-Toluolsulfonsäure und 70 g Toluol unter Durchleiten von Stickstoff azeotrop verestert. Nachdem sich kein Reaktionswasser mehr abschied, wurden 268 g Trimethylolpropan, 6,25 g p-Toluolsulfonsäure und 292 g Toluol zugesetzt, und die azeotrope Veresterung wurde weitergeführt, bis sich wiederum kein Reaktionswasser mehr abschied. In einer letzten Stufe wurden dann 274 g Acrylsäure und jeweils 1,4 g p-Methoxyphenol und Di-tert.-butylhydrochinon zugesetzt. Unter Durchleitung von Luft wurde die azeotrope Veresterung weitergeführt. Nachdem sich kein Reaktionswasser mehr abschied, wurde das Schleppmittel im Vakuum abdestilliert und Reste nichtumgesetzter Acrylsäure wurden mit Luft desorbiert. Es wurde ein Polyesteracrylat mit einer Viskosität von 35 Pas (20°C) und einer Säurezahl von 7,9 erhalten.
Das Harz hat keine emulgierenden Eigenschaften.

**Anwendungsbeispiel**

30 Gew.-Tle. Wasser werden mittels eines Dissolvers (8000 Umdrehungen/Minute) in 70 Gew.-Tle. eines der lagerstabilen Gemische aus den Harzen A, B, C oder D und jeweils eines

Emulgatorharzes im Gewichtsverhältnis 9:1 bis 1:1 und 2, 5 Gew.-% (bezogen auf Harz-Emulgatorharzmischungen) des Photoinitiators, 1-(4-Isopropylphenyl) -2-hydroxy-2-methyl-propan-1-on, eingerührt und 2 Minuten geschert. Anschließend wird durch Zugabe von Wasser bei einer Rührgeschwindigkeit von 1 000 U/min ein Festkörpergehalt von 50 % eingestellt. Es wurden Öl-in-Wasser-Emulsionen mit sehr guter Stabilität erhalten.

Die Emulsionen wurden unter Zuhilfenahme eines Filmaufziehgerätes (Spaltbreite 90µm) auf eine geschliffene, mit einem Polyester beschichtete Holzfläche (um ein Eindringen der Emulsion in die Holzporen zu vermeiden) aufgezogen und nach Abdunsten des Wassers mit 8 m/min unter einem IST-Strahler [Impuls-Strahler der Fa. Strahlentechnik Hildebrand, Werner und Pf leiderer, Leistung 80 Watt/ cm, Strahlerabstand 20 cm)] gehärtet. Anschließend wurden die Pendelhärten nach König (DIN 53 157) bestimmt. Zum Vergleich wurden auch die Pendelhärten von gehärteten Filmen der reinen Harze A, B, C und D sowie der Emulgatorharze angegeben. Die ausgehärteten Beschichtungen wurden auf ihre Chemikalienfestigkeit geprüft, indem sie mit Wasser bzw. mit einem Gemisch aus Wasser und Ethanol im Verhältnis 1:1 bzw. Ethylacetat bzw. mit Aceton benetzt und nach den angegebenen Behandlungszeiten bewertet wurden.

Aus der nachfolgenden Tabelle I sind die Ergebnisse ersichtlich: Beim Vergleich der Werte der Pendelhärte fällt auf, daß die Kombinationen

Harz A / Emulgatorharz II
Harz C / Emulgatorharz II
Harz D / Emulgatorharz I

deutlich höhere Werte zeigen als die reinen Harze A, C oder D und die reinen Emulgatorharze I oder II.

Bei den Kombinationen Harz B/Emulgatorharz II bzw. Harz C/Emulgatorharz III sind zwar die Pendelhärten von Filmen der Kombinationen und der reinen Harze B bzw. C nahezu gleich, wegen der niedrigeren Werte bei den Emulgatorharzen II bzw. III mußten jedoch niedrigere Werte für die Kombinationen erwartet werden.

Tabelle I

| Harz-typ | Emultagorharz-typ | Gewichts-verhältnis | Pendelhärte | Chemikalientest [a)] Wasser [b)] | Wasser [b)] Ethanol | Ethylacetat [b)] | Aceton [c)] |
|---|---|---|---|---|---|---|---|
| A | II | 9:1 | 131" | 0 | 0 | 0 | 1 |
| A | - | - | 82" | - | - | - | - |
| - | II | - | 59" | - | - | - | - |
| B | II | 9:1 | 98" | 0 | 0 | 0 | 0 [d)] |
| B | - | - | 98" | - | - | - | - |
| C | II | 9:1 | 120" | 0 | 0 | 0 | 0 [d)] |
| C | - | | 92" | - | - | - | - |
| D | I | 1:1 | 92" | 0 | 0-1 | 1 | 0 |
| D | - | - | 72" | - | - | - | - |
| - | I | - | 55" | - | - | - | - |
| C | III | 8:2 | 89" | 1 | 2 | 2 | 0 |
| - | III | - | 54" | - | - | - | - |

a) Veränderungen der Beschichtung wurden mit den Zahlen von 0-5 bewertet: 0 keine Veränderung, 5 Abhebung der Schicht

b) nach 16 Stunden

c) nach 5 Minuten

d) nach 8 Stunden

**Patentansprüche**

1. (Meth)Acryloylgruppen enthaltende Polyester der allgemeinen Formel (1)

$(Ac)_x$ T - D - P - D - T $(Ac)_y$ (I)

wobei bedeuten:

Ac einen Acryloyl- oder Methacryloylrest,

x, y gleich oder verschieden, jeweils eine Zahl von 2 bis 5,

T mindestens einen 3- bis 6-wertigen Rest eines oxalkylierten 3- bis 6-wertigen Rest eines aliphatischen gesättigen Alkohols, wobei pro Hydroxylgruppe des Alkhols durchschnittlich mindestens 1 Mol Ethylenoxid -und/oder Propylenoxideinheiten addiert worden sind,

D einen 2-wertigen Rest einer gesättigten oder ungesättigten aliphatischen $C_3$-$C_{10}$-Dicarbonsäure oder einer cycloaliphatiachen, araliphatischeh oder aromatischen $C_8$-$C_{10}$-Dicarbonsäure, oder deren Mischungen, der Rest ist formal, gebildet aus der vorgenannten Dicarbonsäure, vermindert um die HO-Gruppen in den Carboxylgruppen, und

P einen Rest der allgemeinen Formel (II)

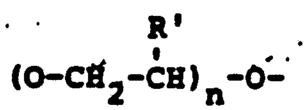 (II)

mit R' = H oder $CH_3$ oder deren Mischungen und

n = einen Zahl von 8 bis 100.

2. Verwendung der Polyester der Formel I gemäß Anspruch 1 als strahlenhärtbares,-oberflächenaktives Mittel in wäßrigen Dispersionen oder Emulsion strahlenhärtbarer Präpolymer in Wasser,

3. Verfahren zur Herstellung von (Meth)Acryloylgruppen enthaltenden Polyestern durch Schmelzkondensation, azeotrope Veresterung, Umesterung oder Alkoholyse, dadurch gekennzeichnet, daß Polyester der allgemeinen Formel (I).

$(Ac)_x$ T - D- P - D - T - $(Ac)_y$ (I)> > > wobei Ac, x, y, T, D und P in Anspruch 1 angegebene Bedeutung haben

a) 1 HO-äquivalent dem Rest P entsprechender Polyalkylenglykole,

b) 2 COOH-äquivalenten dem Rest D entsprechender Dicarbonsäuren,

c) 3 bis 6 HO-äquivalenten dem Rest T entsprechender 3- bis 6-wertiger aliphatischer, oxalkylierter Alkohole und

d) 2 bis 5 COOH-äquivalenten (Meth)Acrylsäure in der Reihenfolge

1.) Vorkondensat aus a) + b), anschließend + c) und daran anschließend + d) oder Vorkondensat aus a) + b) uns anschließend Mischung aus c) + d),

2.) Vorkondensat aus c) + d), anschließeud + b) und daran anschließend + a) oder Vorkondensat aus c) + d) und anschließend Mischung aus b) + a) oder

3.) Vorkondensat aus a) + b) und Vorkondensat aus c) + d)

erhalten werden.

**Claims**

Polyesters containing (meth)acryloyl groups and having the general formula (I) $(Ac)_x$ T-D-P-D-T $(Ac)_y$ (I)

wherein

Ac denotes an acryloyl or methacryloyl radical,

x and y are identical or different and each denotes a number from 2 to 5,

T denotes at least one 3- to 6-valent radical of an alkoxylated 3- to 6-hydric aliphatic saturated alcohol, an average of at least 2 mole of ethylene oxide and/or propylene oxide units having been added on per hydroxyl group of the alcohol,

D denotes a 2-valent radical of a saturated or unsaturated aliphatic $C_3$-$C_{10}$ dicarboxylic acid or of a cycloaliphatic, araliphatic or aromatic $C_8$-$C_{10}$ dicarboxylic acid, or mixtures thereof, the radical is theoretically formed from the aforementioned dicarboxylic acid, minus the HO groups in the carboxyl groups, and P denotes a radical of the general formula

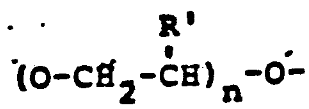 (II)

in which

$R^1$ = H or $CH_3$ or mixtures thereof and

n = a number from 8 to 100.

2. Use of the polyesters of the formula I according to Claim 1 as a radiation-hardenable surface-active agent in aqueous dispersions or emulsions of radiation-hardenable prepolymers in water.

3. Process for the production of polyesters containing (meth)acryloyl groups by melt condensation, azeotropic esterification, transesterification or alcoholysis, characterised in that polyesters of the general formula (I)

$(Ac)_x$ T-D-P-D-T $(Ac)_y$ (I)

wherin

Ac, x, y, T, D and P have the meaning given in Claim 1, are obtained by the stepwise condensation of

a) 1 HO equivalent of polyalkylene glycols corresponding to the radical P,

b) 2 COOH equivalents of dicarboxylic acids corresponding to the radical D,

c) 3 to 6 HO equivalents of 3- to 6-hydric aliphatic, alkoxylated alcohols corresponding to the radical T and

d) 2 to 5 COOH equivalents of (meth)acrylic acid in the order:

1) a precondensate of a) + b), then + c) and then + d) or

a precondensate of a) + b) and then a mixture of c) + d),

2) a precondensate of c) + d), then + b) and then + a) or

a precondensate of c) + d) and then a mixture of b) + a) or

3) a precondensate of a) + b) and a precondensate of c) + d).

## Revendications

Polyesters porteurs de groupes (méth)acryloyle de formule générale (I)

$(Ac)_x$ I - D - P - D - I $(Ac)_y$ (I)

dans laquelle

Ac désigne un reste acryloyle ou méthacryloyle,

x, y égaux ou différents, représentent chacun un nombre de 2 à 5,

T désigne au moins un reste trivalent à hexavalent d'un alcool saturé aliphatique trivalent à hexavalent oxalkylé, une moyenne d'au moins une mole de motif éthylène-oxyde et/ou propylène - oxyde ayant été ajoutée par groupe hydroxy de l'alcool,

D est un reste divalent d'un acide dicarboxylique aliphatique en $C_3$ à $C_{10}$ saturé ou insaturé ou d'un acide dicarboxylique cycloaliphatique, araliphatique ou aromatique en $C_8$ à $C_{10}$, ou leurs mélanges, la formule du reste étant formée de l'acide dicarboxylique mentionné ci-dessus diminué des groupes HO présents dans les groupes carboxyle, et

P est un reste de formule générale (II)

$$(O-CH_2-\overset{R'}{\overset{|}{C}}H)_n-O- \qquad (II)$$

dans laquelle R' représente H ou $CH_3$ ou leursmélanges et

n est un nombre de 8 à 100.

2. Utilisation des polyesters de formule I suivant la revendication 1 comme agent tensioactif radiodurcissable dans des dispersions ou émulsions aqueuses de prépolymères radiodurcissables dans l'eau.

3. Procédé de production de polyesters contenant des groupes (méth)acryloyle par condensation à l'état fondu, estérification azéotrope, transestérification ou alcoolyse, caractérisé en ce qu'on obtient des polyesters de formule générale (I)

$(Ac)_x$ T - D - P - D- T $(Ac)_y$ (I)

dans laquelle Ac, x, y,

T, D et P ont les définitions indiquées dans la revendication 1 par condensation par étapes de

a) 1 équivalent de HO de polyalkylènealcools correspondant au reste P,

b) 2 équivalents de COOH d'acides dicarboxyliques correspondant au reste D,

c) 3 à 6 équivalents de HO d'alcools aliphatiques oxalkylés trivalents à hexavalents correspondant au reste T et

d) 2 à 5 équivalents de COOH d'acide (méth)acrylique dans l'ordre

1.) Précondensat de a) + b), puis + c) et ensuite + d) ou précondensat de a) + b) suivi du mélange de c) + d),

2.) précondensat de c) + d), puis + b) et ensuite + a) ou précondensat de c) + d) puis mélange de b) + a) ou

3.) précondensat de a) + b) et précondensat de c) + d).